# FASCICULE DE BREVET EUROPEEN

(11) **EP 3 627 649 B1**
(45) Date de publication et mention de la délivrance du brevet: **21.12.2022**
(21) Numéro de dépôt: 19196478.2
(22) Date de dépôt: 10.09.2019
(51) Int. Cl.: H02J 3/38, H02M 7/44

(54) **PROCÉDÉ DE CONTRÔLE D'UN GÉNÉRATEUR**
VERFAHREN ZUR STEUERUNG EINES GENERATORS
METHOD FOR CONTROLLING A GENERATOR

(30) Priorité: 18.09.2018 FR 1858434
(43) Date de publication de la demande: 25.03.2020
(73) Titulaire: Schneider Electric Industries SAS, 92500 Rueil Malmaison (FR); Institut Polytechnique de Grenoble, 38000 Grenoble (FR)
(72) Inventeur: MOULICHON, Audrey, 38050 GRENOBLE CEDEX 09 (FR); ALAMIR, Mazen, 38400 SAINT MARTIN D'HERES (FR); RAHMANI, Mustapha Amine, 38050 GRENOBLE CEDEX 09 (FR); GARBUIO, Lauric, 38950 SAINT MARTIN LE VINOUX (FR); DEBUSSCHERE, Vincent, 38000 GRENOBLE (FR); WANG, Miao-Xin, 38050 GRENOBLE CEDEX 09 (FR); HADJ-SAID, Nouredine, 38000 GRENOBLE (FR)
(74) Mandataire: Brevalex

(56) Documents cités:
- EP-A1- 2 940 826
- EP-A1- 2 963 759
- EP-A1- 3 208 907
- US-A1- 2015 295 511
- US-A1- 2017 047 861

## Description

### DOMAINE TECHNIQUE

La présente invention concerne un procédé de contrôle d'un générateur, et plus particulièrement d'un générateur pourvu d'un onduleur.

La présente invention concerne notamment un procédé de contrôle d'un générateur destiné à assurer la stabilité de fonctionnement de ce dernier.

### ÉTAT DE LA TECHNIQUE ANTÉRIEURE

Le concept de générateur virtuel, mis en lumière en particulier par l'avènement des micro-réseaux, est connu de l'état de la technique et décrit dans le document [1] cité à la fin de la description.

Un tel générateur est notamment pourvu, d'une source de puissance électrique, tel que des panneaux photovoltaïques, et un onduleur. La source de puissance électrique génère une tension et un courant continus destinés à être convertis par l'onduleur en une tension et un courant alternatifs avant d'être injectés sur un réseau de distribution électrique.

Ce générateur virtuel est muni d'une loi de commande permettant audit générateur de réduire (lisser) l'effet des fluctuations de puissance électrique de la source de puissance sur le réseau de distribution électrique.

Un tel générateur virtuel peut néanmoins, sous certaines conditions, présenter des instabilités, notamment en cas de court-circuit et en cas de faible courant circulant sur le micro réseau.

Afin de pallier ce problème, des impédances, dites impédances virtuelles, ont été considérées dans la loi de commande afin de garantir la stabilité du modèle la régissant. À cet égard, l'homme du métier peut consulter le document [2] cité à la fin de la description.

Cependant, la configuration de telles impédances peut être compliquée, et est surtout dépendante de l'architecture du micro réseau sur lequel est implanté le générateur virtuel.

Par ailleurs, la mise en œuvre des impédances virtuelles impose de prélever un courant, notamment un courant de référence, en sortie de l'onduleur affectant d'autant le rendement du générateur virtuel.

Un but de la présente invention est alors de proposer un procédé de contrôle d'un générateur permettant d'assurer la stabilité de fonctionnement de ce dernier.

Un autre but de la présente invention est de proposer un procédé de contrôle d'un générateur qui soit peu ou pas dépendant du générateur considéré.

Un autre but de la présente invention est de proposer un procédé de contrôle d'un générateur permettant d'assurer la stabilité de fonctionnement de ce dernier plus simple à mettre en œuvre que les procédés connus de l'état de la technique.

Document US 2017/0047861 A1 décrit un convertisseur de puissance avec un dispositif de contrôle configuré pour contrôler le convertisseur de façon à opérer comme un générateur synchrone virtuel.

Document EP 3 208907 A1 décrit un procédé de contrôle d'un générateur virtuel comprenant au moins une source d'énergie renouvelable.

### EXPOSÉ DE L'INVENTION

L'invention de la présente application est définie dans les revendications indépendantes 1 et 15. Les revendications dépendantes définissent les modes de réalisation préférés.

C'est à dire que les buts de la présente invention sont, au moins en partie, atteints par un procédé de contrôle d'un générateur comprenant un onduleur pourvu d'interrupteurs électroniques qui, commandés sur la base de rapports cycliques instantanés α_{abc}, permettent audit onduleur de délivrer à un réseau de distribution électrique une puissance électrique P_{abc} de tension alternative, dite tension source V_{abc}, et de courant alternatif, dit courant source I_{abc}, lesdits tension V_{abc} et courant I_{abc} présentant une fréquence f_{abc}, l'onduleur étant contrôlé par une loi de commande qui comprend :
a) une boucle d'observation configurée pour estimer un courant réseau (Ir) effectivement requis par le réseau de distribution électrique, le courant réseau étant estimé à partir de la tension source Vabc, du courant source labc et de la fréquence fabc par modélisation de la connexion entre l'onduleur et le réseau de distribution électrique,
b) une boucle d'intégration configurée pour évaluer un écart ε entre le courant source labc et le courant réseau Ir,
c) une boucle de correction qui, des lors que l'écart ε est supérieur à un écart dit écart de référence ε^{∗}, est configurée pour contrôler l'ajustement par l'onduleur des rapports cycliques instantanés αabc de manière a réduire l'écart ε a une valeur inférieure à l'écart de référence ε^{∗}.

Le courant réseau Iᵣ est estimé à partir de la tension source V_{abc}, du courant source I_{abc} et de la fréquence f_{abc}.

Selon un mode de mise en œuvre, l'étape a) comprend une mesure de la tension source V_{abc}, du courant source I_{abc}, et de la fréquence f_{abc}, avantageusement la tension source V_{abc}, le courant source I_{abc}, et la fréquence f_{abc} sont mesurés au niveau de bornes de connexions de l'onduleur au réseau de distribution électrique.

Selon un mode de mise en œuvre, la boucle d'observation estime également à partir de la tension source V_{abc}, le courant source I_{abc} et de la fréquence f_{abc}, une tension, dite tension réseau Vᵣ, effectivement requise sur le réseau de distribution électrique, la tension réseau Vᵣ et le courant réseau Iᵣ étant estimées sur la base d'une modélisation de la connexion de l'onduleur au réseau de distribution électrique.

Selon un mode de mise en œuvre, la boucle de correction détermine, sur la base de la tension réseau Vᵣ et de la différence Δε entre l'écart ε et l'écart de référence ε^{∗}, un courant et une tension dits, respectivement, courant ajusté I_{abcref} et tension ajustée V_{abcref}, que l'onduleur doit effectivement délivrer au réseau de distribution électrique.

Selon un mode de mise en œuvre, la boucle de correction estime un premier écart d'ajustement εₓ entre le courant ajusté I_{abcref}, et le courant source I_{abc} ainsi qu'entre la tension ajusté V_{abcref}, et tension réseau Vᵣ.

Il est entendu que le premier écart d'ajustement comprend au moins deux composantes relatives, respectivement, à l'écart entre le courant ajusté I_{abcref}, et le courant source I_{abc} et à l'écart entre la tension ajusté V_{abcref}, et tension réseau Vᵣ.

Selon un mode de mise en œuvre, la boucle de correction estime un second écart d'ajustement εᵤ entre des rapports ajustés α_{ref} et les rapports cycliques instantanés α_{abc}, les rapports ajustés α_{ref} étant les rapports cycliques permettant à l'onduleur de délivrer le courant ajusté I_{abcref} à la tension ajusté V_{abcref}.

Selon un mode de mise en œuvre, la boucle de correction estime, sur la base du premier écart d'ajustement εₓ et du second écart d'ajustement εᵤ, la correction Δα_{ref} à apporter aux rapports cycliques instantanés α_{abc} pour que l'onduleur délivre le courant ajusté I_{abcref}.

Selon un mode de mise en œuvre, l'écart ε est évalué par incrément de temps successifs de manière à en déterminer l'évolution.

Selon un mode de mise en œuvre, la dynamique d'ajustement par l'onduleur du courant source I_{abc} dépend de l'évolution de l'écart ε.

Selon un mode de mise en œuvre, l'onduleur forme avec au moins une source d'énergie, avantageusement d'énergie renouvelable, un système d'accumulation comprenant une réserve de puissance et/ou d'énergie, et la loi de commande, un générateur virtuel, la puissance électrique P_{abc} étant une puissance active et/ou réactive contrôlant par statisme, respectivement, la fréquence f et la tension efficace Vᵣₘₛ de la tension source V_{abc}, le procédé comprenant un contrôle du générateur virtuel par la loi de commande pour qu'il exécute un ajustement de la puissance P_{abc} délivrée au réseau de distribution électrique, ledit ajustement étant adapté pour compenser une variation de la puissance active/réactive consommée par le réseau.

Selon un mode de mise en œuvre, la loi de commande est adaptée pour conférer au générateur virtuel, avantageusement via l'onduleur, la possibilité de former le réseau.

Selon un mode de mise en œuvre, la loi de commande est adaptée pour connecter en parallèle le générateur virtuel avec au moins une autre source de puissance connectée au réseau de distribution.

Selon un mode de mise en œuvre, le système d'accumulation applique une tension V_{ref} continue à des premières bornes de la source d'énergie de sorte que la source d'énergie délivre une puissance Pₛᵣ, ladite puissance Pₛᵣ est susceptible de présenter des fluctuations de puissance, le système d'accumulation est contrôlé pour compenser les fluctuations.

L'invention concerne également un programme d'ordinateur comprenant des instructions qui, lorsque le programme est exécuté par un ordinateur ou une carte de contrôle, conduisent à mettre en œuvre le procédé selon la présente invention.

L'invention concerne également un générateur comprenant un onduleur pourvu d'interrupteurs électroniques qui, commandés sur la base de rapports cycliques instantanés α_{abc}, permettent audit onduleur de délivrer à un réseau de distribution électrique une puissance électrique P_{abc} de tension alternative, dite tension source V_{abc}, et de courant alternatif, dit courant source I_{abc}, lesdits tension V_{abc} et courant I_{abc} présentant une fréquence f_{abc}, l'onduleur étant contrôlé par une loi de commande qui comprend :
a) une boucle d'observation configurée pour estimer un courant réseau (Ir) effectivement requis par le réseau de distribution électrique, le courant réseau étant estimé à partir de la tension source Vabc, du courant source labc et de la fréquence fabc par modélisation de la connexion entre l'onduleur et le réseau de distribution électrique,
b) une boucle d'intégration configurée pour évaluer un écart ε entre le courant source labc et le courant réseau Ir,
c) une boucle de correction qui, des lors que l'écart ε est supérieur à un écart dit écart de référence ε^{∗}, est configurée pour contrôler l'ajustement par l'onduleur des rapports cycliques instantanés αabc de manière a réduire l'écart ε a une valeur inférieure à l'écart de référence ε^{∗}.

### BRÈVE DESCRIPTION DES DESSINS

D'autres caractéristiques et avantages apparaîtrons dans la description qui va suivre des modes de mise en œuvre du procédé de contrôle d'un générateur selon l'invention, donnés à titre d'exemples non limitatifs, en référence aux dessins annexés dans lesquels :
- la figure 1 est une représentation schématique d'un générateur virtuel connu de l'état de la technique et décrit dans le document [1] cité à la fin de la description, le générateur représenté comprend une source d'énergie renouvelable ;

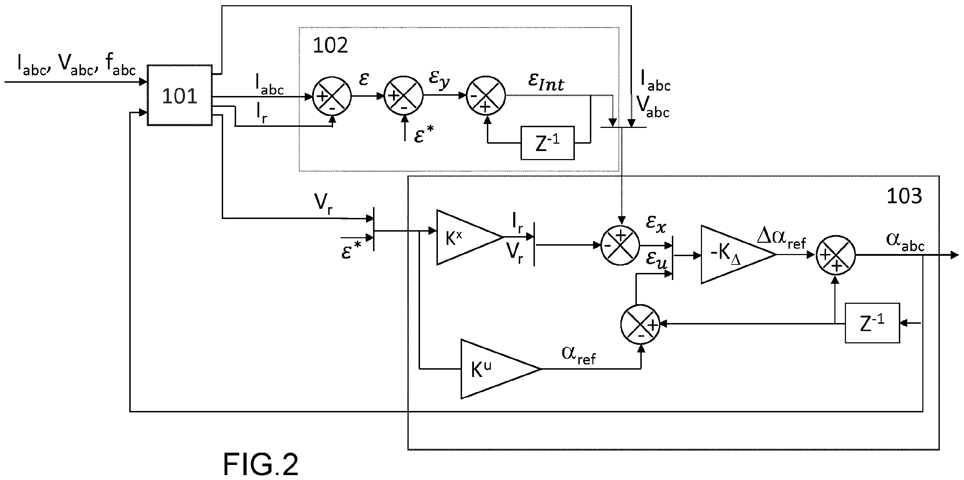

- la figure 2 est une représentation schématique du procédé selon la présente invention ;
- la figure 3 est une représentation de la fréquence f du courant et de la tension en fonction de la puissance active P délivrée par un groupe électrogène, la fréquence f étant représentée sur l'axe vertical et la puissance active P sur l'axe horizontal ;
- la figure 4 est une représentation de la tension efficace Vᵣₘₛ de la tension V en fonction de la puissance réactive Q délivrée par le groupe électrogène, la tension efficace Vᵣₘₛ étant représentée sur l'axe vertical et la puissance réactive Q sur l'axe horizontal ;
- la figure 5 est une représentation d'un schéma électrique équivalent de la connexion de l'onduleur au réseau de distribution électrique.

### EXPOSÉ DÉTAILLÉ DE MODES DE RÉALISATION PARTICULIERS

La présente invention décrite de manière détaillée ci-dessous met en œuvre un procédé de contrôle d'un générateur pourvu d'un onduleur délivrant à un réseau de distribution électrique une puissance électrique P_{abc}.

En particulier, le générateur est pourvu d'une loi de commande permettant d'ajuster le courant délivré au réseau de distribution de sorte qu'il y ait équilibre entre la puissance consommée et la puissance fournie.

L'invention va maintenant être décrite dans le contexte d'un générateur virtuel, et notamment dans le contexte du générateur virtuel décrit dans le document [1]. A cet égard, le contenu du document [1] est ici incorporé par référence.

L'invention bien que décrite dans le contexte d'un générateur virtuel ne doit toutefois pas être limitée à cet aspect. En particulier, tout générateur comprenant de manière générale un onduleur 4, destiné à injecter sur un réseau un courant et une tension alternative, pourra être considéré.

Nous entendons par générateur virtuel, un générateur se comportant comme un groupe électrogène.

Un générateur virtuel 1 selon la présente invention est pourvu d'un onduleur 4 qui délivre à un réseau de distribution électrique une puissance active/réactive P_{abc}.

La puissance active P_{abc} et réactive Q_{abc} sont caractérisées par une tension alternative, dite tension source V_{abc}, et un courant alternatif, dit courant source I_{abc}, tous deux présentant une fréquence f_{abc},

La tension source V_{abc} et le courant source I_{abc} sont le résultat d'une conversion par l'onduleur 4, respectivement, d'une tension continue V_{c} et d'un courant continu I_{c} produits par une source d'énergie 2.

La source d'énergie 2 peut être une source d'énergie renouvelable, et par exemple comprendre des panneaux photovoltaïques, des éoliennes, des hydroliennes, des machines thermodynamiques.

L'onduleur 4 est pourvu d'interrupteurs électroniques qui, commandés sur la base de rapports cycliques dits rapports cycliques instantanés α_{abc}, imposent audit onduleur 4 de délivrer le courant source I_{abc} de fréquence f_{abc}.

Les interrupteurs électroniques peuvent par exemple comprendre des transistors bipolaires à grille isolée (« IGBT » ou « Insulated Gate Bipolar Transistor» selon la terminologie anglo-saxonne).

Le générateur virtuel 1 peut également comprendre un système d'accumulation 3 de puissance et/ou d'énergie.

Le générateur virtuel 1, selon l'invention, est contrôlé par une loi de commande qui intègre les équations différentielles permettant de modéliser le fonctionnement (le comportement) du groupe électrogène. Ainsi le générateur virtuel 1 est configuré pour émuler le comportement d'un générateur synchrone, et plus particulièrement celui d'un groupe électrogène. La configuration du générateur virtuel 1 comprend alors la détermination des équations différentielles régissant le fonctionnement du générateur synchrone et du développement d'un programme d'ordinateur (ou d'un algorithme) basé sur lesdites équations différentielles. La configuration est connue des techniques de l'homme du métier, et est décrite dans le document [1].

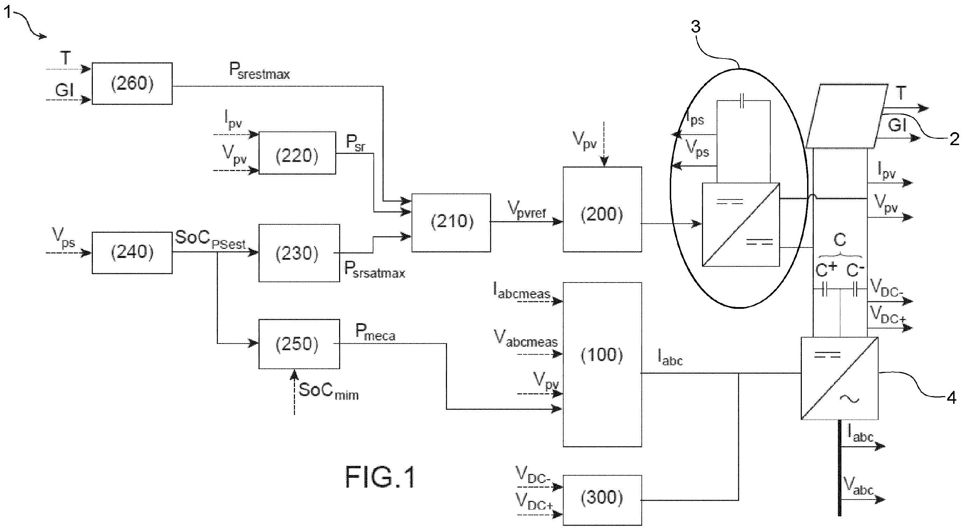

A cet égard, et en référence à la figure 1 (figure la du document [1]), la loi de commande peut comprendre différents blocs de commande. Cette dernière comprend notamment un bloc 100 noté « Virtual Generator ».

Il est entendu que la loi de commande est mise en œuvre par des moyens informatiques tels qu'un ordinateur, un calculateur, ou encore une carte de contrôle par exemple pourvue d'un processeur.

La loi de commande, via le bloc 100, impose à l'onduleur 4 de délivrer le courant source I_{abc}, La valeur de référence du courant I_{abc} peut être déterminée par le bloc 100 en fonction de la tension V_{abc} délivrée par l'onduleur 4 et mesurée à sa sortie (V_{abcmes}). Ainsi l'onduleur 4 reproduit le courant I_{abc} d'un groupe électrogène délivrant une tension V_{abc}, et répondant aux équations différentielles modélisant ledit groupe électrogène.

La loi de commande de l'onduleur 4 est également adaptée, selon de techniques connues de l'homme du métier, pour conférer au générateur virtuel 1 la possibilité de former le réseau (« Grid Forming » selon la terminologie Anglo-Saxonne).

Ainsi, le générateur virtuel 1 peut être seul à fournir de la puissance électrique au micro réseau tout comme un groupe électrogène le ferait.

La loi de commande est également adaptée pour permettre au générateur virtuel 1 de répondre à des appels de charge sur le réseau de distribution électrique.

Un appel de charge comprend soit une connexion soit une déconnexion d'une charge soit une variation de la puissance consommée par ladite charge sur le réseau de distribution électrique.

La loi de commande, et plus particulièrement le bloc 100, peut mettre en œuvre une boucle d'observation 101, une boucle d'intégration 102 et une boucle de correction 103.

La boucle d'observation 101 est destinée à déterminer un courant, dit courant réseau Iᵣ, effectivement requis par le réseau de distribution électrique.

L'estimation du courant réseau Iᵣ est exécutée à partir de la tension source V_{abc} et la fréquence source f_{abc}.

En effet, dès lors qu'une charge se connecte ou se déconnecte du réseau de distribution électrique, un appel de charge se fait directement ressentir au niveau de la connexion entre l'onduleur 4 et le réseau de distribution électrique, et se traduit par une variation à la hausse ou à la baisse du courant source I_{abc} et de la tension source V_{abc}.

Ces variations, et notamment la variation de la tension source V_{abc}, permettent via une modélisation de la connexion entre l'onduleur 4 et le réseau de distribution électrique de déterminer le courant réseau Iᵣ.

Selon le même principe, la boucle d'observation 101 estime également à partir de la tension source V_{abc}, du courant source I_{abc} et de la fréquence f_{abc}, la tension, dite tension réseau Vᵣ, effectivement requise sur le réseau de distribution électrique.

La modélisation qui fait appel aux caractéristiques du réseau de distribution électrique et de l'onduleur 4, est bien connue de l'homme du métier, et n'est donc pas décrite en détails dans la présente demande.

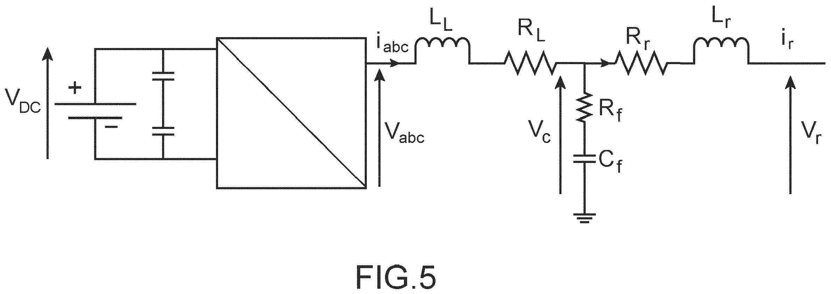

La modélisation fait notamment appel à une mise en équations de la connexion de l'onduleur 4 au réseau de distribution électrique. La figure 5 illustre, à cet égard, le schéma électrique équivalent de la connexion entre l'onduleur 4 et le réseau de de distribution électrique. Les symboles figurant dans la figure 5 sont définis dans le tableau suivant :

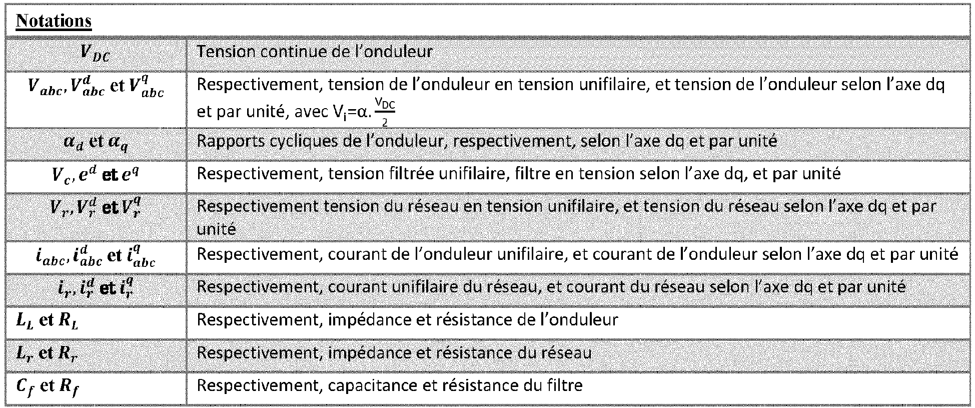

La boucle d'observation peut donc mettre en œuvre la mesure du courant source I_{abc}, de la tension source V_{abc} et de la fréquence f_{abc} afin de détecter tout appel de charge. En particulier, les mesures de la tension source V_{abc}, du courant source Ia_{bc}, et de la fréquence f_{abc}, sont exécutées au niveau de bornes de connexions de l'onduleur 4 au réseau de distribution électrique.

La mesure peut être exécutée à des intervalles de temps réguliers, par exemple à une fréquence de 6,66 KHz.

La boucle d'intégration 102 évalue un écart ε entre le courant source I_{abc} et le courant réseau Iᵣ estimé par la boucle d'observation.

Cet écart ε peut ensuite être comparé à un écart dit écart de référence ε^{∗}. Le résultat de cette comparaison est un écart, dit écart d'intégration noté εᵢₙₜ.

L'écart de référence ε^{∗} peut être, par exemple, inférieur à 10%, préférentiellement inférieur à 5%. De manière particulièrement avantageuse, l'écart de référence ε^{∗} est nul.

L'évaluation de l'écart d'intégration εᵢₙₜ peut être exécutée à des intervalles de temps réguliers, par exemple à une fréquence de 20 KHz.

La boucle d'intégration 102 peut également évaluer l'évolution de l'écart d'intégration εᵢₙₜ. En particulier, la boucle d'intégration 102 peut évaluer l'écart εᵢₙₜ entre deux écarts d'intégration εᵢₙₜ successifs.

La boucle de correction 103 est adaptée pour contrôler un ajustement par l'onduleur 4 du courant source I_{abc}, En particulier, dès lors que l'écart ε est supérieur à l'écart de référence ε^{∗}, la boucle de correction 103 calcul les rapports cycliques α_{ref}, permettant à l'onduleur 4 de réduire l'écart ε à une valeur inférieure à l'écart de référence ε^{∗}.

Notamment, la boucle de correction 103 détermine, sur la base de la tension réseau Vᵣ et de la différence entre l'écart ε et l'écart de référence ε^{∗}, un courant et une tension, dits respectivement courant ajusté I_{abcref} et tension ajustée V_{abcref}, que l'onduleur 4 doit effectivement délivrer au réseau de distribution électrique.

La détermination du courant ajusté I_{abcref} et de la tension V_{abcref} est alors suivie d'une estimation, par la boucle de correction 103, d'un écart, dit premier d'ajustement εₓ, entre ledit courant ajusté I_{abcref} et le courant source I_{abc} ainsi qu'entre la tension ajusté V_{abcref}, et tension source Vabc.

La boucle de correction peut également évaluer un écart, dit second écart de référence εᵤ, des rapports cycliques ajustés α_{ref} et les rapports cycliques instantanés α_{abc}, associés au courant I_{abc} effectivement délivré par l'onduleur 4.

La boucle de correction détermine, sur la base du premier ajustement εₓ, et du second ajustement εᵤ, la correction Δα_{ref} à apporter aux rapports cycliques pour que l'onduleur 4 délivre au réseau de distribution électrique le courant ajusté I_{abcref}.

De manière particulièrement avantageuse, la boucle de correction 103 comprend un régulateur quadratique linéaire.

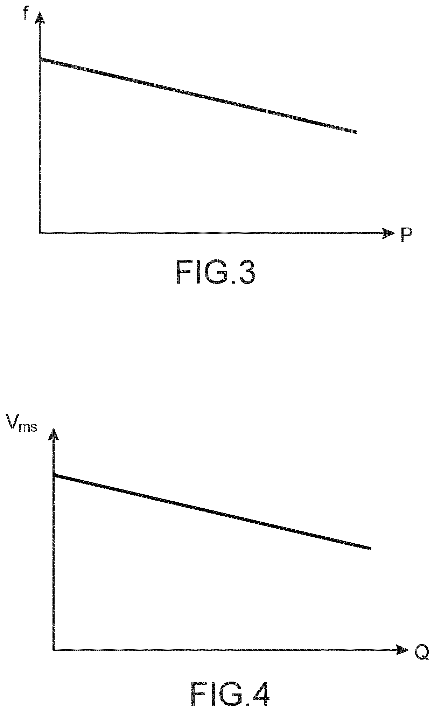

De manière particulièrement avantageuse, le générateur virtuel 1 présente un contrôle par statisme en fréquence f_{abc/}puissance active P_{abc}. Le contrôle par statisme en fréquence f_{abc}/puissance active P_{abc} est une caractéristique d'un générateur synchrone, tel qu'un groupe électrogène. Un groupe électrogène comprend généralement un arbre entraîné, par un moteur diesel, en rotation angulaire dont la fréquence correspond à la fréquence f du courant et de la tension produits par ledit groupe. La fréquence de l'arbre suit un contrôle par statisme fréquence f/puissance active P selon une loi présentée à la figure 3. Le contrôle par statisme fréquence f/puissance active P permet au groupe électrogène d'adapter la fréquence f du signal qu'il délivre en fonction de la puissance active P électrique qu'il fournit. Cet effet de statisme permet de connecter en parallèle différents groupes électrogènes qui délivreront un courant et une tension, sur le réseau, de même fréquence f. Dans le cadre du générateur virtuel 1 selon l'invention, la fréquence f du courant et de la tension délivrés par ledit générateur virtuel 1 dépend des spécifications du micro réseau (« Grid code » selon la terminologie Anglo-Saxonne). Par exemple, la fréquence f peut être comprise entre 48 et 52 Hz, ou encore entre 49,5 et 50,5 Hz, ou entre 58 et 62 Hz, ou encore entre 59,5 et 60,5 Hz.

Toujours de manière particulièrement avantageuse, le générateur virtuel 1 présente, également, un contrôle par statisme en tension efficace Vᵣₘₛ/puissance réactive Q (Vᵣₘₛ étant la tension efficace de la tension source V_{abs}). Le contrôle par statisme en tension efficace Vᵣₘₛ/puissance réactive Q est une caractéristique d'un générateur synchrone, tel qu'un groupe électrogène. Un groupe électrogène comprend généralement un rotor entraîné en rotation dans un stator et un régulateur de tension automatique (« AVR » ou « Automatic Voltage Regulator » selon la terminologie Anglo-Saxonne) agissant sur les enroulements rotoriques du rotor. Le régulateur de tension automatique applique, ainsi, une tension sur le rotor en fonction d'une tension du signal électrique (donc de la puissance) délivré par le stator (par le groupe électrogène) sur le réseau. La tension efficace Vᵣₘₛ du signal électrique délivré par le groupe électrogène suit un contrôle par statisme tension efficace Vᵣₘₛ/puissance réactive Q selon une loi présentée à la figure 4. Le contrôle par statisme tension efficace Vᵣₘₛ/puissance réactive Q permet au groupe électrogène d'adapter la tension efficace Vᵣₘₛ de la tension qu'il délivre en fonction de la puissance électrique réactive Q qu'il fournit.

Le mode de contrôle de l'onduleur tel que décrit ci-dessus est indépendant de la configuration du réseau ou de l'installation considérée, et est d'une configuration plus simple par rapport aux modes de contrôle connus de l'état de la technique.

### RÉFÉRENCES

[1] EP3208907;
[2] Rahmani et al., « Virtual Synchronous Generators for microgrid stabilization : Modeling, implementation and experimental validation on a microgrid laboratory », IEEE 2017 Asian Conférence on Energy, Power and Transportation Electrification.

## Revendications

1. Procédé de contrôle d'un générateur (1) comprenant un onduleur (4) pourvu d'interrupteurs électroniques qui, commandés sur la base de rapports cycliques instantanés α_{abc}, permettent audit onduleur (4) de délivrer à un réseau de distribution électrique une puissance électrique P_{abc} de tension alternative, dite tension source V_{abc}, et de courant alternatif, dit courant source I_{abc}, lesdits tension V_{abc} et courant I_{abc} présentant une fréquence f_{abc}, l'onduleur (4) étant contrôlé par une loi de commande qui comprend :
a) une boucle d'observation (101) configurée pour estimer un courant réseau (Iᵣ) effectivement requis par le réseau de distribution électrique, le courant réseau étant estimé à partir de la tension source V_{abc}, du courant source I_{abc} et de la fréquence f_{abc} par modélisation de la connexion entre l'onduleur (4) et le réseau de distribution électrique,
b) une boucle d'intégration (102) configurée pour évaluer un écart ε entre le courant source I_{abc} et le courant réseau Iᵣ,
c) une boucle de correction (103) qui, dès lors que l'écart ε est supérieur à un écart dit écart de référence ε^{∗}, est configurée pour contrôler l'ajustement par l'onduleur (4) des rapports cycliques instantanés α_{abc} de manière à réduire l'écart ε à une valeur inférieure à l'écart de référence ε^{∗}.

2. Procédé selon la revendication 1, dans lequel l'étape a) comprend une mesure de la tension source V_{abc}, du courant source I_{abc}, et de la fréquence f_{abc}, avantageusement la tension source V_{abc}, le courant source I_{abc}, et la fréquence f_{abc} sont mesurés au niveau de bornes de connexions de l'onduleur (4) au réseau de distribution électrique.

3. Procédé selon l'une des revendications 1 ou 2, dans lequel la boucle d'observation (101) estime également à partir de la tension source V_{abc}, du courant source I_{abc} et de la fréquence f_{abc}, une tension, dite tension réseau Vᵣ, effectivement requise sur le réseau de distribution électrique, la tension réseau Vᵣ et le courant réseau Iᵣ étant estimés sur la base d'une modélisation de la connexion du l'onduleur au réseau électrique.

4. Procédé selon la revendication 3, dans lequel la boucle de correction (103) détermine, sur la base de la tension réseau Vᵣ et de la différence Δε entre l'écart ε et l'écart de référence ε^{∗}, un courant et une tension dits, respectivement, courant ajusté I_{abcref}. et tension ajustée V_{abcref}, que l'onduleur (4) doit effectivement délivrer au réseau de distribution électrique.

5. Procédé selon la revendication 4, dans lequel la boucle de correction (103) estime un premier écart d'ajustement εₓ entre le courant ajusté I_{abcref}, et le courant source I_{abc} ainsi qu'entre la tension ajusté V_{abcref}, et la tension source V_{abc}.

6. Procédé selon la revendication 4 ou 5, dans lequel la boucle de correction (103) estime un second écart d'ajustement εᵤ entre des rapports ajustés α_{ref} et les rapports cycliques instantanés α_{abc}, les rapports ajustés α_{ref} étant les rapports cycliques permettant à l'onduleur (4) de délivrer le courant ajusté I_{abcref} et la tension ajustée V_{abcref},.

7. Procédé selon les revendications 5 et 6, dans lequel la boucle de correction (103) estime, sur la base du premier écart d'ajustement εₓ et du second écart d'ajustement εᵤ, la correction Δα_{ref} à apporter aux rapports cycliques instantanés α_{abc} pour que l'onduleur (4) délivre le courant ajusté I_{abcref}.

8. Procédé selon l'une des revendications 1 à 7, dans lequel l'écart ε est évalué par incrément de temps successifs de manière à en déterminer l'évolution.

9. Procédé selon la revendication 8, dans lequel la dynamique d'ajustement par l'onduleur (4) du courant source I_{abc} dépend de l'évolution de l'écart ε.

10. Procédé selon l'une des revendications précédentes, dans lequel l'onduleur (4) forme avec au moins une source d'énergie (2), avantageusement d'énergie renouvelable, un système d'accumulation (3) comprenant une réserve de puissance et/ou d'énergie, et la loi de commande, un générateur (1) virtuel, la puissance électrique P_{abc} étant une puissance active et/ou réactive contrôlant par statisme, respectivement, la fréquence f et la tension efficace Vᵣₘₛ de la tension source V_{abc}, le procédé comprenant un contrôle du générateur virtuel (1) par la loi de commande pour qu'il exécute un ajustement de la puissance P_{abc} délivrée au réseau de distribution électrique, ledit ajustement étant adapté pour compenser une variation de la puissance active/réactive consommée par le réseau.

11. Procédé selon la revendication 10, dans lequel la loi de commande est adaptée pour conférer au générateur (1) virtuel, avantageusement via l'onduleur (4), la possibilité de former le réseau.

12. Procédé selon la revendication 10 ou 11, dans lequel la loi de commande est adaptée pour connecter en parallèle le générateur (1) virtuel avec au moins une autre source de production de puissance connectée au réseau de distribution.

13. Procédé selon l'une des revendications 10 à 12, dans lequel le système d'accumulation (3) applique une tension V_{ref} continue à des premières bornes de la source d'énergie (2) de sorte que la source d'énergie (2) délivre une puissance Pₛᵣ, ladite puissance Pₛᵣ est susceptible de présenter des fluctuations de puissance, le système d'accumulation (3) est contrôlé pour compenser les fluctuations.

14. Programme d'ordinateur comprenant des instructions qui, lorsque le programme est exécuté par un ordinateur ou une carte de contrôle, conduisent à mettre en œuvre le procédé selon l'une des revendications 1 à 13.

15. Générateur (1) comprenant un onduleur (4) pourvu d'interrupteurs électroniques qui, commandés sur la base de rapports cycliques instantanés α_{abc}, permettent audit onduleur (4) de délivrer à un réseau de distribution électrique une puissance électrique P_{abc} de tension alternative, dite tension source V_{abc}, et de courant alternatif, dit courant source I_{abc}, lesdits tension V_{abc} et courant I_{abc} présentant une fréquence f_{abc}, l'onduleur (4) étant contrôlé par une loi de commande qui comprend :
a) une boucle d'observation (101) configurée pour estimer un courant réseau (Iᵣ) effectivement requis par le réseau de distribution électrique, le courant réseau étant estimé à partir de la tension source V_{abc}, du courant source I_{abc} et de la fréquence f_{abc} par modélisation de la connexion entre l'onduleur (4) et le réseau de distribution électrique,
b) une boucle d'intégration (102) configurée pour évaluer un écart ε entre le courant source I_{abc} et le courant réseau Iᵣ,
c) une boucle de correction (103) qui, dès lors que l'écart ε est supérieur à un écart dit écart de référence ε^{∗}, est configurée pour contrôler l'ajustement par l'onduleur (4) des rapports cycliques instantanés α_{abc} de manière à réduire l'écart ε à une valeur inférieure à l'écart de référence ε^{∗}.

## Patentansprüche

1. Verfahren zum Regeln eines Generators (1) mit einem Wechselrichter (4), der mit elektronischen Schaltern versehen ist, die, gesteuert anhand von momentanen Tastverhältnissen α_{abc}, dem Wechselrichter (4) gestatten, eine elektrische Leistung P_{abc} aus Wechselspannung, Quellenspannung V_{abc} genannt, und Wechselstrom, Quellenstrom I_{abe} genannt, an ein elektrisches Verteilungsnetz abzugeben, wobei die Spannung V_{abc} und der Strom I_{abe} eine Frequenz f_{abc} aufweisen, wobei der Wechselrichter (4) durch ein Regelungsgesetz geregelt wird, das umfasst:
a) eine Beobachtungsschleife (101), die dazu ausgelegt ist, einen Netzstrom (Iᵣ) zu schätzen, der effektiv von dem elektrischen Verteilungsnetz benötigt wird, wobei der Netzstrom ausgehend von der Quellenspannung V_{abc}, dem Quellenstrom I_{abe} und der Frequenz f_{abc} durch Modellierung der Verbindung zwischen Wechselrichter (4) und elektrischem Verteilungsnetz geschätzt wird,
b) eine Integrationsschleife (102), die dazu ausgelegt ist, eine Abweichung ε zwischen dem Quellenstrom I_{abe} und dem Netzstrom Iᵣ auszuwerten,
c) eine Korrekturschleife (103), die dazu ausgelegt ist, sobald die Abweichung ε größer als eine als Referenzabweichung ε* bezeichnete Abweichung ist, den Abgleich der momentanen Tastverhältnisse α_{abc} durch den Wechselrichter (4) zu steuern, um die Abweichung ε auf einen Wert zu reduzieren, der kleiner als die Referenzabweichung ε* ist.

2. Verfahren nach Anspruch 1,
wobei Schritt a) eine Messung der Quellenspannung V_{abc}, des Quellenstroms I_{abe} und der Frequenz f_{abc} umfasst, wobei vorteilhafterweise die Quellenspannung V_{abc}, der Quellenstrom I_{abe} und die Frequenz f_{abc} an Anschlüssen von Verbindungen des Wechselrichters (4) mit dem elektrischen Verteilungsnetz gemessen werden.

3. Verfahren nach einem der Ansprüche 1 bis 2,
wobei die Beobachtungsschleife (101) ausgehend von der Quellenspannung V_{abc}, dem Quellenstrom I_{abe} und der Frequenz f_{abc} auch eine Spannung, Netzspannung Vᵣ genannt, schätzt, die effektiv am elektrischen Verteilungsnetz benötigt wird, wobei die Netzspannung Vᵣ und der Netzstrom Iᵣ anhand einer Modellierung der Verbindung des Wechselrichters mit dem elektrischen Netz geschätzt werden.

4. Verfahren nach Anspruch 3,
wobei die Korrekturschleife (103) anhand der Netzspannung Vᵣ und der Differenz Δε zwischen der Abweichung ε und der Referenzabweichung ε* einen Strom und eine Spannung, Abgleichstrom I_{abcref} bzw. Abgleichspannung V_{abcref} genannt, bestimmt, die der Wechselrichter (4) effektiv an das elektrische Verteilungsnetz abgeben soll.

5. Verfahren nach Anspruch 4,
wobei die Korrekturschleife (103) eine erste Abgleichabweichung εₓ zwischen dem Abgleichstrom I_{abcref} und dem Quellenstrom I_{abc} sowie zwischen der Abgleichspannung V_{abcref} und der Quellenspannung V_{abc} schätzt.

6. Verfahren nach Anspruch 4 oder 5,
wobei die Korrekturschleife (103) eine zweite Abgleichabweichung εᵤ zwischen Abgleichverhältnissen α_{ref} und den momentanen Tastverhältnissen α_{abc} schätzt, wobei die Abgleichverhältnisse α_{ref} die Tastverhältnisse sind, die es dem Wechselrichter (4) gestatten, den Abgleichstrom I_{abcref} und die Abgleichspannung V_{abcref} abzugeben.

7. Verfahren nach Anspruch 5 und 6,
wobei die Korrekturschleife (103) anhand der ersten Abgleichabweichung εₓ und der zweiten Abgleichabweichung εᵤ die Korrektur Δα_{ref} schätzt, die an den momentanen Tastverhältnissen α_{abc} vorgenommen werden soll, damit der Wechselrichter (4) den Abgleichstrom I_{abcref} abgibt.

8. Verfahren nach einem der Ansprüche 1 bis 7,
wobei die Abweichung ε in aufeinanderfolgenden Zeitinkrementen ausgewertet wird, um ihren Verlauf zu ermitteln.

9. Verfahren nach Anspruch 8,
wobei die Dynamik beim Abgleich des Quellenstroms I_{abe} durch den Wechselrichter (4) vom Verlauf der Abweichung ε abhängt.

10. Verfahren nach einem der vorhergehenden Ansprüche,
wobei der Wechselrichter (4) mit zumindest einer Energiequelle (2), vorteilhaft aus erneuerbarer Energie, ein Speichersystem (3) bildet, das eine Leistungs- und/oder Energiereserve, das Regelungsgesetz und einen virtuellen Generator (1) umfasst, wobei die elektrische Leistung P_{abc} eine Wirk- und/oder Blindleistung ist, die jeweils durch Statik die Frequenz f und die Effektivspannung Vᵣₘₛ der Quellenspannung V_{abc} regelt, wobei das Verfahren eine Regelung des virtuellen Generators (1) durch das Regelungsgesetz umfasst, damit er einen Abgleich der an das elektrische Verteilungsnetz abgegebenen Leistung P_{abc} durchführt, wobei der Abgleich dazu ausgelegt ist, eine Änderung der über das Netz verbrauchten Wirk-/ Blindleistung zu kompensieren.

11. Verfahren nach Anspruch 10,
wobei das Regelungsgesetz dazu ausgelegt ist, dem virtuellen Generator (1) vorteilhafterweise über den Wechselrichter (4) die Möglichkeit zu bieten, das Netz zu bilden.

12. Verfahren nach Anspruch 10 oder 11,
wobei das Regelungsgesetz dazu ausgelegt ist, den virtuellen Generator (1) mit zumindest einer weiteren, an das Verteilernetz angeschlossenen Leistungserzeugungsquelle parallel zu schalten.

13. Verfahren nach einem der Ansprüche 10 bis 12,
wobei das Speichersystem (3) eine Gleichspannung V_{ref} an erste Anschlüsse der Energiequelle (2) anlegt, so dass die Energiequelle (2) eine Leistung Pₛᵣ abgibt, wobei die Leistung Pₛᵣ Leistungsschwankungen aufweisen kann, wobei das Speichersystem (3) geregelt wird, um die Schwankungen zu kompensieren.

14. Computerprogramm mit Anweisungen, die, wenn das Programm von einem Computer oder einer Steuerplatine ausgeführt wird, dazu führen, das Verfahren nach einem der Ansprüche 1 bis 13 durchzuführen.

15. Generator (1) mit einem Wechselrichter (4), der mit elektronischen Schaltern versehen ist, die, gesteuert anhand von momentanen Tastverhältnissen α_{abc}, dem Wechselrichter (4) gestatten, eine elektrische Leistung P_{abc} aus Wechselspannung, Quellenspannung V_{abc} genannt, und Wechselstrom, Quellenstrom I_{abe} genannt, an ein elektrisches Verteilungsnetz abzugeben, wobei die Spannung V_{abc} und der Strom I_{abe} eine Frequenz f_{abc} aufweisen, wobei der Wechselrichter (4) durch ein Regelungsgesetz geregelt wird, das umfasst:
a) eine Beobachtungsschleife (101), die dazu ausgelegt ist, einen Netzstrom (Iᵣ) zu schätzen, der effektiv von dem elektrischen Verteilungsnetz benötigt wird, wobei der Netzstrom ausgehend von der Quellenspannung V_{abc}, dem Quellenstrom I_{abe} und der Frequenz f_{abc} durch Modellierung der Verbindung zwischen Wechselrichter (4) und elektrischem Verteilungsnetz geschätzt wird,
b) eine Integrationsschleife (102), die dazu ausgelegt ist, eine Abweichung ε zwischen dem Quellenstrom I_{abe} und dem Netzstrom Iᵣ auszuwerten,
c) eine Korrekturschleife (103), die dazu ausgelegt ist, sobald die Abweichung ε größer als eine als Referenzabweichung ε* bezeichnete Abweichung ist, den Abgleich der momentanen Tastverhältnisse α_{abc} durch den Wechselrichter (4) zu steuern, um die Abweichung ε auf einen Wert zu reduzieren, der kleiner als die Referenzabweichung ε* ist.

## Claims

1. Method for controlling a generator (1) comprising an inverter (4) provided with electronic switches which, controlled based on instantaneous duty cycles α_{abc}, allow said inverter (4) to deliver to an electrical distribution network electric power P_{abc} of alternating voltage, called source voltage V_{abc}, and alternating current, called source current I_{abc}, said voltage V_{abc} and current I_{abc} having a frequency f_{abc}, the inverter (4) being controlled by a control rule which comprises:
a) an observation loop (101) configured to estimate a network current (Iᵣ) actually required by the electrical distribution network, the network current being estimated from the source voltage V_{abc}, the source current I_{abc} and the frequency f_{abc} by modelling the connection between the inverter (4) and the electrical distribution network,
b) an integration loop (102) configured to evaluate a deviation ε between the source current I_{abc} and the network current Iᵣ,
c) a correction loop (103) which, when the deviation ε is greater than a deviation called reference deviation ε^{∗}, is configured to control the adjustment by the inverter (4) of the instantaneous duty cycles α_{abc} so as to reduce the deviation ε to a value lower than the reference deviation ε^{∗}.

2. Method according to claim 1, wherein step a) comprises a measurement of the source voltage V_{abc}, of the source current I_{abc}, and the frequency f_{abc}, advantageously the source voltage V_{abc}, the source current I_{abc}, and the frequency f_{abc} are measured at terminals for connecting the inverter (4) to the electrical distribution network.

3. Method according to one of claims 1 or 2, wherein the observation loop (101) also estimates, based on the source voltage V_{abc}, the source current I_{abc} and the frequency f_{abc}, a voltage, called network voltage Vᵣ, actually required by the electrical distribution network, network voltage Vᵣ and the network current Iᵣ being estimated based on a modelling of the connection of the inverter to the electrical network.

4. Method according to claim 3, wherein the correction loop (103) determines, based on the network voltage Vᵣ and the difference Δε between the deviation ε and the reference deviation ε^{∗}, a current and a voltage called, respectively, adjusted current I_{abcref} and adjusted voltage V_{abcref}, that the inverter (4) must actually deliver to the electrical distribution network.

5. Method according to claim 4, wherein the correction loop (103) estimates a first adjustment deviation εₓ between the adjusted current I_{abcref} and the source current I_{abc} as well as between the adjusted voltage V_{abcref}, and the source voltage V_{abc}.

6. Method according to claims 4 or 5, wherein the correction loop (103) estimates a second adjustment deviation εᵤ between adjusted ratios α_{ref} and the instantaneous duty cycles α_{abc}, the adjusted ratios α_{ref} being the duty cycles allowing the inverter (4) to deliver the adjusted current I_{abcref} and the adjusted voltage V_{abcref}.

7. Method according to claims 5 and 6, wherein the correction loop (103) estimates, based on the first adjustment deviation εₓ and the second adjustment deviation εᵤ, the correction Δα_{ref} to be applied to the instantaneous duty cycles α_{abc} for the inverter (4) to deliver the adjusted current I_{abcref}.

8. Method according to one of claims 1 to 7, wherein the deviation ε is evaluated by successive time increments so as to determine its evolution.

9. Method according to claim 8, wherein the dynamics of the adjustment by the inverter (4) of the source current I_{abc} depends on the evolution of the deviation ε.

10. Method according to one of the preceding claims, wherein the inverter (4) forms with at least one source (2) of energy, advantageously of renewable energy, an accumulation system (3) comprising a reserve of power and/or energy, and the control rule, a virtual generator (1), the electrical power P_{abc} being an active and/or a reactive power controlling by statics, respectively, the frequency f and the effective voltage Vᵣₘₛ of the source voltage V_{abc}, the method comprising a control of the virtual generator (1) by the control rule to execute an adjustment of the power P_{abc} delivered to the electrical distribution network, said adjustment being adapted to compensate for a variation in the active/reactive power consumed by the network.

11. Method according to claim 10, wherein the control rule is adapted to confer on the virtual generator (1), advantageously via the inverter (4), the possibility of forming the network.

12. Method according to claim 10 or 11, wherein the control rule is adapted to connect the virtual generator (1) in parallel with at least one other power production source connected to the distribution network.

13. Method according to one of claims 10 to 12, wherein the accumulation system (3) applies a DC voltage V_{ref} to first terminals of the source (2) of energy such that the source (2) of energy delivers a power Pₛᵣ, said power Pₛᵣ is likely to have power fluctuations, the accumulation system (3) is controlled to compensate for the fluctuations.

14. Computer program comprising instructions which, when the programme is executed by a computer or a control card, lead to the implementation of the method according to one of claims 1 to 13.

15. Generator (1) comprising an inverter (4) provided with electronic switches which, controlled based on instantaneous duty cycles α_{abc}, allow said inverter (4) to deliver to an electrical distribution network electric power P_{abc} of alternating voltage, called source voltage V_{abc}, and alternating current, called source current I_{abc}, said voltage V_{abc} and current I_{abc} having a frequency f_{abc}, the inverter (4) being controlled by a control rule which comprises:
a) an observation loop (101) configured to estimate a network current (Iᵣ) actually required by the electrical distribution network, the network current being estimated from the source voltage V_{abc}, the source current I_{abc} and the frequency f_{abc} by modelling the connection between the inverter (4) and the electrical distribution network,
b) an integration loop (102) configured to evaluate a deviation ε between the source current I_{abc} and the network current Iᵣ,
c) a correction loop (103) which, when the deviation ε is greater than a deviation called the reference deviation ε^{∗}, is configured to control the adjustment by the inverter (4) of the instantaneous duty cycles α_{abc} so as to reduce the deviation ε to a value lower than the reference deviation ε^{∗}.
